# EUROPEAN PATENT APPLICATION

(11) **EP 2 924 675 A1**
(43) Date of publication of application: **30.09.2015**
(21) Application number: 15397501.6
(22) Date of filing: 16.01.2015
(51) Int. Cl.: G09B 19/00, A61B 5/00, A61B 5/11, A63B 24/00

(54) **Educational gadget, system and method for teaching correct exercise or its correct trajectory**

(30) Priority: 26.03.2014 FI 20144071 U; 05.11.2014 FI 20145967
(71) Applicant: Spinnosport Oy, 02660 Espoo (FI)
(72) Inventor: Lähteenmäki, Mika Kalevi, 02660 Espoo (FI)
(74) Representative: Lahti, Heikki

(57) **Abstract**

System for teaching a correct exercise or a correct trajectory of the exercise to the user, who is a moving person, the system comprising a processor unit (5) and a memory unit (6) and at least one accelerometer (4) measuring sensor communicating with each other, the sensor being connected to or in contact with at least one measuring point a region of the head or torso above the belt line of the wearer's body, preferably the region of the head, chest, upper back and shoulder area, most preferably the region of the head region, for collecting measuring information describing the exercise or the trajectory from the measuring point. Provides the user in real time with a feedback signal of whether the determined motion data is within the pre-set limit values, whereby the exercise of the user takes place correctly or the trajectory is correct.

## Description

The invention relates to a physical measurement used in measuring devices, and more specifically, the invention relates to an educational gadget, system, and method according to the introductory part of the independent claim 1 for teaching a correct exercise, such as running or walking, etc., or a correct trajectory of the exercise to a user, who is a moving person.

An object of the invention is provide a new and simpler solution to measure motions and correct trajectory of the moving person. The system should be suitable for use in educational purposes for several different types of exercises and motions trajectories.

When making the acceleration or angular-based measurement, it is important that the sensor signal integration time is not too long, and that therefore an error caused by the sensor measurement error becomes too great. To prevent this exercises often seek to distribute sufficiently short, cyclically recurring intervals, i.e. cyclic measurement, when measured, for example, the forward speed, distance, direction, step frequency (cadence) and time as well as step length. Cyclic measurement is important for sports coaching and competitions, as well as fitness and other outdoor activities. The mode of transportation may be, for example, running, walking, Nordic walking, race walking, cross-country skiing, ski jumping, roller skiing, roller skating, ice skating, or similar, where the motion is cyclic.

There are several prior art solutions, which are suitable for navigation, and a step aimed at measuring the distance travelled by using the accelerometer. For example, inertial navigation is used to measure the distance travelled most of the accelerometer. An acceleration sensor can measure foot contact time with the substrate. Such a measurement method gives good results in large rates of flow, but it is not a reliable one for slow running or walking, because a foot rise from the ground is hard to detect by the accelerometer accurately.

Regarding the present invention the publication FI 122712 represents the closest prior, and describes a method and apparatus for measuring the progress of Mobility. According to the publication, a progress pf mobility parameters are measured by acceleration sensor and vertical acceleration values are calculated. This publication presumes proposes, in this respect i.e. regarding measurement of the acceleration values for measuring a progress of a moving person, as part of the present description of the invention.

The accelerometer can be a simple switch or the like, to measure a number of steps and a distance is estimated basing to a step length and to a speed cadence. Such devices are called pedometers. Solutions to measure actual exercises by acceleration sensors from the foot are disclosed by patent application US-2002/0040601 and patent publications US-5955667 and CA 2218242. In these known solutions, several acceleration and angular motion sensor measurement signals are combined and a significantly higher degree of accuracy is achieved than by a pedometer or by contact time measurements. Weakness of these known solutions is the high number of different sensors, such as linear acceleration sensor and angular motion sensor, as well as the complexity of the algorithm, is needed to compensate error caused of the Earth's gravity field, tilting and the change thereof. Weaknesses appear on the system size, cost and power consumption. The measurement is proposed to simplify the use of the accelerometer, taking advantage of the information that the foot of the vertical position when it is in the country and thus by auto-reset aims to improve the accuracy. Such a solution is disclosed in U.S. Patent No. 6,356,856. The weakness of this solution is the inaccuracy in the tilt changes during the exercise, in addition; also in this case the calculation is complicated, which requires energy and memory capacity.

From US-Patent 6298314 a method is known for applying an acceleration sensor for detecting an exercise and a residence time for measuring the motion. Patent publications US-7092846 and WO-00/20874 are known installations to measure exercises of an athlete. In these known solutions is a general problem of simplicity, and it is through a low cost, small size, low power consumption and the accuracy of the combination. The major sources of error are the gravity of the measurement signal when the angle changes, foot ground contact unambiguous detection, and foot bones of the ground contact, which distorts the acceleration and the speed signal.

According to the present invention, one of the objects is to eliminate or at least substantially reduce the prior art disadvantages and weaknesses and to provide a new and improved system to teach and/or learn the correct exercise or the correct trajectory to the user of the system. The objects of the present invention may be achieved by the system disclosed at the beginning, for example as defined in the characterizing part of the independent claim 1.

According to the present embodiment of the invention, the system is a learning one whereby the system is learning such that limit values in the memory unit are changing or updateable, whereby the limit values are change or updated into the memory unit of the system as new limit values, which indicate more significantly the lower and upper limit values for the exercise or the trajectory, preferably the limit values converge each by and during teaching and on learning the correct exercise or the correct trajectory, optionally said varying or updateable limit values are limit values, which describe exercise of another target person, who is preferably a top athlete, and which the user is trying to achieve by exercising or trajectories.

Preferably, the system according to the present invention is a portable or mobile and comprises: a measuring unit, which has an acceleration sensor and which is in a contact with a measuring point that is at a region of the head or torso above the belt line of the wearer's body, preferably at the region of the head, chest, upper back and shoulder area, most preferably at the region of the head region, for collecting measuring information from the measuring point; a memory and processor unit, which is the processor and comparison unit and a memory unit, and which determines motion data of the user's exercise and trajectory from the collected measuring information, as well as compares the motion data with the stored limit values; and means for providing the user with a feedback signal regarding the exercise or the trajectory in real time.

According to another embodiment of the present invention the system comprises: the measuring unit, which is mobile with the user and which includes an integrated or an associated accelerometer for receiving and collecting from the acceleration sensor the measuring information that describes the user's exercise or trajectory, the accelerometer being in contact with the wearer's body at upper part of the torso region or at the region of the head; and the memory and processor unit, which communicates with the measuring unit and includes a processor and comparison unit and a memory unit and which is preferably a data processing device or computer, for determining, from the measurement information that describes user's exercise or trajectory, the motion data that describes the exercise, as well as to compare the determined motion data with the stored limit values, and to provide a feedback signal or a like feedback.

At the system according to the invention, data transfer from the measuring unit to the memory and processor unit, which defines the motion data, is possible activate by manipulating the acceleration sensor or the measuring unit. Such a sensor solution according to the invention is suitable for use in a number of different types of educational solutions regarding physical activities and trajectories. In particular it is now possible to examine, how the measuring information or variables thereof, which describe the exercise and the trajectory, stays within the limit values as a function of time, i.e. how the variable functioning the exercise or the trajectory, i.e. functions of the harmonics and interharmonics, stays within the limit values.

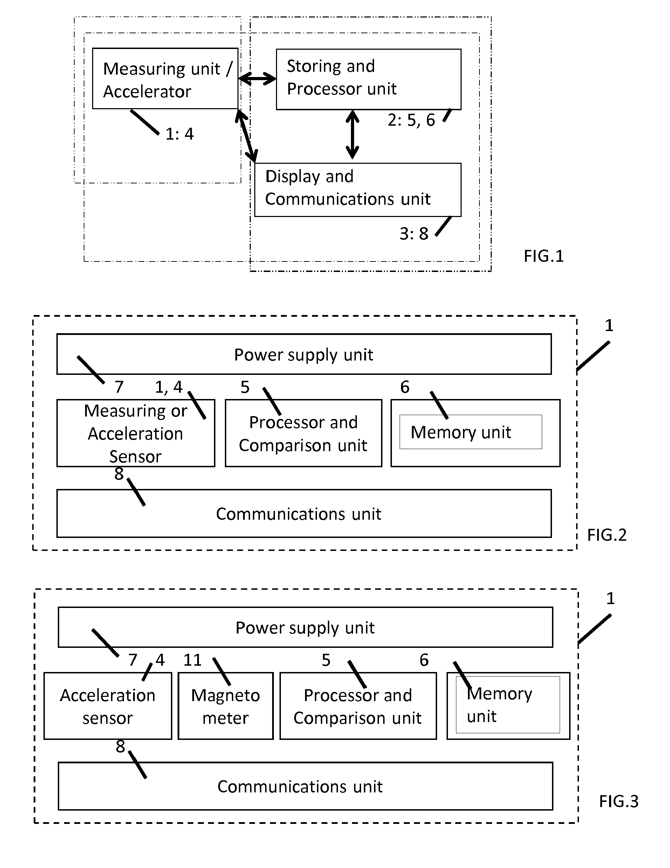

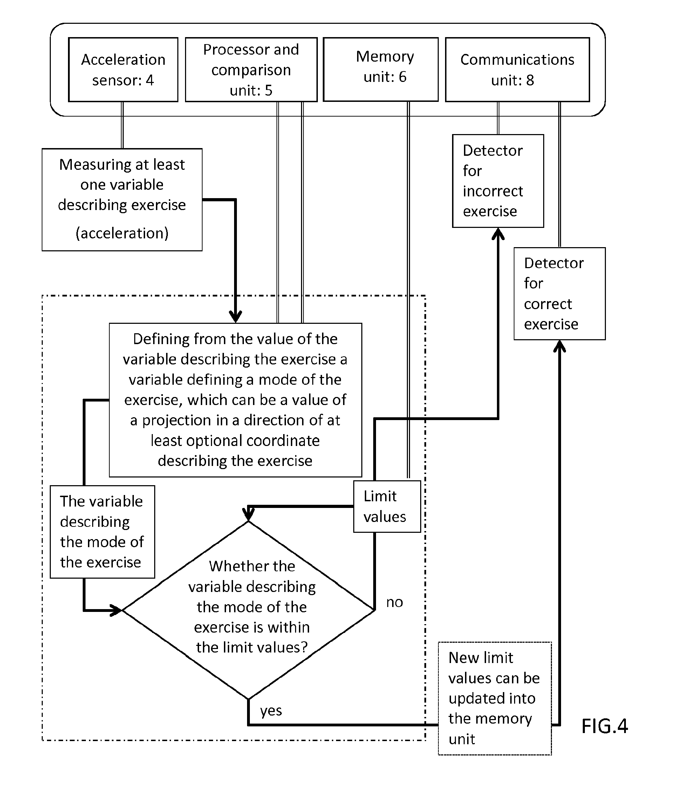

The invention and its preferred embodiments will be described by way of an example with reference to the accompanying drawings, where:
Figure FIG.1 presents generally and schematically a principle of the present invention;
Figure FIG.2 presents schematically a first embodiment of the invention,
Figure FIG.3 presents a schematically another, alternative embodiment, and
Figure FIG.4 presents by means of a flow diagram function of system of Figure FIG.2 for providing an educational or feedback signal to the user.

Fig Fig.1 shows a diagram of a measuring system according to the invention, which may consist of one unit of measuring, recording and processor unit 2, display and communication unit 3. These communicate with each other wirelessly or by wire. Some of the units or the entire system can be integrated into a single housing or unit. The measuring unit 1 which is a measuring sensor such as an acceleration sensor 4 may be hold or it may be placed in the vicinity of the human body such as the torso or the centre of gravity of the body near or in the vicinity of the head, such as the forehead or brow close.

Typically, the measuring unit 1 is placed in clothing of the moving person, such as for example an outfit, a hat, a pocket or a belt or round the neck. A display unit 3, which serves not only as the display of the system may also output an educational signals or feedback, is placed typically to a very visible location. It may be e.g. integrated into the measuring or storing unit 1, 2, or it may be separate. It should be noted that the educational signal or the feedback can also be a sound from a sound generator or a light emitting means, such as a LED (Light Emitting Diode), which is seen in the user's field of vision. The display unit constituting the display device may be, of course, constituted as part of a clock, satellite navigator, mobile terminal, radio receiver, music player etc.

Fig FIG.2 shows a diagram of a portable measuring system according to the invention, which comprises a measuring sensor 1 which may be for example a 1 to 3 axis acceleration sensor 4 as well as a processor and comparison unit 5 and at least one memory unit 6 for collecting and storing acceleration data, and a communication unit 7 and a power supply unit 8, e.g. disposable or rechargeable battery or the like. The processor and comparison unit 5 may be for example microprocessor based or DSP based (DSP, Digital Signal Processor). To the memory unit 6 are stored the correct limit values for the exercise or the trajectory, as well as, for example the user, calibration, measurement, and other log information. The communication unit 7 allows to provide the system with control commands or control signals and to output/express the educational signals or feedback, for example, as tone voice or as light visible in the user's visual field. A preferred light detector might be a green or red light LED light (LED, Light Emitting Diode) visible in the user's visual field depending on the result of the comparison.

The solution according to the invention is used to measure by a system comprising the processor and comparison unit 5 and the memory unit 6, which communicate with each other, and which system has at least one measuring sensor 1, which is preferably an acceleration sensor 4 that is, in at least one measuring point, connected to or in contact with the user's body, such as the head or another body part, and which system measures for detecting the user's cyclic exercise, such as running, walking, or the like trajectory, at least time as well as , preferably as a function of time or time interval, in one or several directions at least one variable the describes user's exercise, which variable is selected from the group consisting of acceleration, acceleration vector, or a mean acceleration or a change thereof in relation to each other the in an orthogonal 3D coordinate system consisting of x, y, z coordinates which are at an angle, e.g. at the right angle, in relation to each other. The accelerations can of course also be measured in 2D or 3D coordinate systems or spaces.

During each measurement cycle the maximum acceleration can be determined at the acceleration phase and the negative minimum acceleration of the breaking phase can be determined at the braking phase, respectively. These can also be determined as the projection value/values of the acceleration corresponding to an optional coordinate value/values in the measuring coordinate system. It is preferable to use a mean acceleration value according to an appropriate cycle, then the integration time does not become too long and the resulting sensor error does not become too heavy.

In solution according to the present invention, firstly is defined a motion data or information by means of the variable that describes at least one exercise or trajectory, which variable is selected from the group comprising a vertical or horizontal deviation of the measuring point or user, in particular the magnitude, speed and/or frequency thereof; inclination from the vertical and/or horizontal plane; speed, distance travelled, cadence, number of steps, length of steps. Then, at least one motion data describing the exercise or trajectory is compared to the limit values which are in the memory unit 6, one of which is the lover limit expressing correct exercise and trajectory, and which one is the upper limit expressing the correct exercise and trajectory. As the result from the comparison, the present system gives a signal, such as a light or sound signal, or the like feedback whether the exercise or trajectory is taking place within the limit values, i.e. correct, or outside the same, i.e. incorrect.

The solution according to the present invention may be a learning one, such that the limit values in memory unit 6 are variable, whereby the limit values will change or update into the system unit as new limit values in order to express more precisely the correct lower and upper limits of the correct exercise or the correct trajectory. It is preferred that the limit values converge on the teaching and the learning the correct exercise or the correct trajectory. The changing or updatable the limit values may be limit values of another target person who can be, for example, the desired top athlete, whereby the user is trying to reach the same by his/her exercises or trajectories.

According to an examplatory embodiment one solution of the present invention a means is portable by the user or a portable device that comprises: a measurement unit 1, which has the acceleration sensor 4 for the measurement of the variable describing the exercise, such as a running, a walking, or alike trajectory; and memory and processor unit 2, which has the processor and comparison unit 5 and the memory unit 6, for the determination of the variable describing the exercise or the motion from the measured variable describing the exercise of the picture counter variable, as well as for comparing the variable describing the exercise or the motion with the stored limit values and for outputting in real time to the user a signal/feedback, such as a light or sound signal etc., concerning the exercise or the trajectory.

Reference is made to Figure FIG.4, which illustrates the operation of the system according to Figure FIG.2 as a flow chart, in order to give the educational or feedback signal to the user. Operation according to Figure FIG.4 comprises:
a) Measuring by the acceleration sensor 4 at least one variable value describing the exercise or the trajectory, the value being preferably the acceleration in an optional direction, preferably in the vertical direction;
b) Determining or calculating at the processor and a comparison unit 5 from the value of the variable describing the exercise or trajectory a variable describing a mode of the exercise, which is preferably a value of a projection of the variable describing the exercise or trajectory in at least one direction of an optional coordinate of the measuring coordinate system, more preferably in a direction of a vertical coordinate of a coordinate system;
c) Receiving from the memory unit 6 to the processor and comparison unit 5 the limit values that describing the correct mode of the exercise;
d) Comparing at the processor and comparison unit 5 whether the determined value of the variable describing the mode of the exercise is within the received limit values, whereby the mode of the exercise is correct, or whether the determined value of the variable describing the mode of the exercise is outside the received limit values, whereby the mode of the exercise is incorrect; and
e) Transmitting, depending on the result of the comparison, from the processor and comparison unit 5 signal to the correct or incorrect exercise or trajectory detector.

The above-mentioned detectors for the exercise or trajectory may be connected with a communication unit 8 and may be integrated into one single detector unit, but depending on the input, the output from the detector may different for the correct exercise or trajectory and the incorrect exercise or trajectory.

According to another embodiment of the present invention, the solution comprises separate, by wire and/or wirelessly into data communication with each other connected: the measurement unit 1, which is in a mobile station or in a portable device or in a corresponding mobile device and which is provided with an acceleration sensor 4, which is connected to or integrated with the mobile terminal or device portable by the user or a corresponding mobile device, in a purpose to measure the variable describing the exercise, such as running or walking, or alike trajectory, the variable describing the measurement; and the memory and processor unit 2 having the processor and comparison unit 5 and the memory unit 6, and being preferably a data processing device or computer, in order determinate the variable describing the exercise or trajectory from the measured variable describing the exercise or trajectory, as well as for comparing the variable describing the exercise or trajectory with the stored limit values and for outputting the signal/feedback, such as light or sound signal, etc.

When the measurement unit 1, which is in a mobile station or in a portable device or in a corresponding mobile device, and when the determination device or means or unit are separate but connectable with each other into a wired and/or wireless data transmission connection, it is preferred that the data transmission from measurement unit 1 to the processor unit 2 for determining the variable describing the exercise or trajectory is possible to activate by manipulating the portable device provided with the acceleration sensor 4.

Figure FIG.3 presents a picture of an alternative measuring system according to the invention. If there is a need know also a travelled route in addition to the speed and distance, a 2- or 3-axis magnetometer 11 is placed to the alternative measuring system in order to define the direction of each step or occasional compass direction.

The invention has been described above only by way of illustration, by means the basic idea and some implementation of the examples. This is intended to limit in any way the present invention, and as is obvious to those skilled in the art, alternative solutions and functionally equivalent modifications can be applied within the scope defined by the accompanying claims. Thus, the measurement unit may consist of a credit card-type unit, which can be in a pocket or in a user's headdress or attached to the user's torso, and to which is connected by wire or wirelessly a LED indicator, which indicates whether the exercise or trajectory is performed correct od incorrect on the basis of the stored limit values. Such an on-board and light measuring device, which constitutes as such whole or part of the system of the invention, is preferably provided with a power source, such as a small button battery. The measurement unit 1 may be connected to or integrated with the recording unit that may be memory card, chip or equivalent flash memory device.

## Claims

1. Educational gadget for teaching a correct exercise, such as running or walking, etc., or a correct trajectory of the exercise to a user, who is a moving person, whereby said gadget includes a processor unit (5) and a memory unit (6) and at least one accelerometer (4) etc. measuring sensor communicating with each other, the sensor being connected to or in contact with at least one measuring point a region of the head or torso above the belt line of the wearer's body, preferably the region of the head, chest, upper back and shoulder area, most preferably the region of the head region, **characterized in that** the educational gadget is mobile or portable by the user, and that said gadget comprises: that the training means is the user's on-board or a notebook, and that said means include:
- Measuring unit (1) that comprises said at least one measuring sensor (4) that collects measurement information from the measuring point;
- Memory and processing unit (2) that comprises said processor and the comparison unit (5) and that said memory unit (6), which receive from the measurement unit the measurement information and determine from the received measurement information the motion data that describes the user's exercise or trajectory and which compare the determined motion data memory with stored limit values; and
- Signal output means, etc., which provide in real-time a feedback signal to the user regarding the exercise or the trajectory thereof.

2. Educational gadget according to claim 1, **characterized in that** the acceleration sensor (4) is integrated into the measuring unit (1) so that the measuring information describing the user's exercise or trajectory can be received from the acceleration sensor, and that the memory and processing unit (2), which communicates with the measuring unit (1), is preferably a data processing device or computer that compares the motion data to the limit values.

3. Educational gadget according to claim 1 and/or 2, **characterized in that**
a. The motion data describing the user's exercise or exercise trajectory describes an average motion of the measuring point during an optional time interval, so that individual deviations do not significantly obscure the average value;
b. The movement to be measured is selected from the group consisting of the vertical accelerationofthe measuring point, the swing motionofthe measuring point laterally, in particular magnitude and/or speed and/or frequency of the swing motion, and an inclination of the measuring point forward or backward or laterally;
c. one of the limit values in the memory unit (6) is the lower limit value for the correct exercise or trajectory of the exercise and another of the limit values in the memory unit (6) is the upper limit value for the correct exercise or trajectory of the exercise;
d. The feedback signal is a light or sound signal, etc. feedback on whether the motion data is within the limit values or outside of the same.

4. Educational gadget according to any of claims 1 - 3, **characterized in that** the educational gadget is learning one in such a way and that the limit values that are in the memory unit (6) are changing or updatable limit values which represent more specifically and/or converge each other on learning the correct exercise or the correct trajectory, optionally whereby said limit values are limit values of another person or preferably a target person, who is preferably a top athlete, describing the limit values of exercise or trajectory thereof which the user is trying to reach by ownpersonal exercising or trajectories.

5. Educational gadget according to any of claims 1 - 3, **characterized in that** data transmission from the measuring unit (1) to the storing and processing unit (2) can be activated by manipulating the accelerometer (4) or the measuring unit (1).

6. System for teaching a correct exercise, such as running or walking, etc., or a correct trajectory of the exercise to the user, who is a moving person, the system comprising a processor unit (5) and a memory unit (6) and at least one accelerometer (4) etc. measuring sensor communicating with each other, the sensor being connected to or in contact with at least one measuring point a region of the head or torso above the belt line of the wearer's body, preferably the region of the head, chest, upper back and shoulder area, most preferably the region of the head region, for collecting measuring information describing the exercise or the trajectory from the measuring point, **characterized in that** the system
- Determines at least one motion data that is based on collected measuring information and describes an average movement of the measuring during an optional time interval such that the individual deviations do not significantly obscure the average value, whereby the motion to be measured is selected from the group consisting of a vertical acceleration of the measuring point, the swing motion of the measuring point laterally, in particular the magnitude and/or speed and/or frequency thereof, and an inclination of the measuring point forward or backward or laterally;
- Continuously compares the determined motion data with the limit values which are in system memory unit (6) and one of which indicates the lower limit for the correct exercise or the correct trajectory and another of which indicates the correct upper limit value for the correct exercise or the trajectory; and
- Provides the user in real time with a feedback signal which is a light or sound signal, etc., of whether the determined motion data is within the pre-set limit values, whereby the exercise of the user takes place correctly or the trajectory is correct, or of whether the determined motion data is outside the limit values, whereby the exercise of the user or the trajectory has something to learn, or to correct etc.

7. System according to claim 6, **characterized in that** the system comprises:
- The measuring unit (1) that is portable with the user and into which is integrated or associated the acceleration sensor (4) for receiving and collecting the measuring information that describes user's exercise or trajectory from the acceleration sensor, which is in contact with the region of the head or the upper part of the torso of the wearer's body; and
- The memory and processing unit (2), which communicates with the measuring unit (1) having the processor and comparison unit (5) and the memory unit (6) that is preferably a data processing device or computer for determining the motion data from the measuring information describing the user's exercise or trajectory, as well as for comparing the determined motion data with the stored limit values and for outputting the feedback signal, etc. feedback.

8. Method for teaching an exercise, such as running or walking, etc., or a correct trajectory of the exercise to the user, who is a moving person, the method comprises:
i. Using of an educational gadget, includes a comparison unit (5) and a memory unit (6) and at least one acceleration sensor (4) etc. measuring sensor communicating with each other a processor, the sensor being connected to or in contact with at least one measuring point a region of the head or torso above the belt line of the wearer's body, preferably the region of the head, chest, upper back and shoulder area, most preferably the region of the head region,
ii. Measuring at least time and in the functionof time or time interval at least one variable, which describes an exercise or trajectory of exercise of a moving person, and
iii. Selecting the variable, which describes the exercise or exercise trajectory, is selected from a group comprising acceleration, acceleration vector, or an average acceleration of a variation in any of these,
**characterized in**
iv. Defining the variable describing the exercise by means of the measured time or the time interval and by at least one measuring information describing user's exercise or a trajectory thereof, whereby the variable is selected group consisting of the vertical accelerationof the measuring point, the swing motionof the measuring point laterally, in particular the magnitude and/or the speed and/or the frequencyofthe swing motion, and an inclination of the measuring point forward or backward or laterally;
v. Comparing the variable describing said exercise with the limit values, one of which is the lower limit value for the correct of exercise or exercise trajectory and another of which is the upper limit value for the correct of exercise or exercise trajectory;
vi. Providing a feedback signal, preferably a light and/or sound signal etc., of whether
- The exercise takes place correctly, i.e. the trajectories are within the limit value or limit values, or
- The exercise takes place incorrectly or whether there is room for improvements, i.e. the trajectories outside the limit value or limit values.

9. Method according to claim 8, **characterized in**
a) Measuring by the acceleration sensor (4) at least one variable value describing the exercise or the trajectory, the value being preferably the acceleration in an optional direction, preferably in the vertical direction;
b) Determining or calculating at the processor and a comparison unit (5) from the value of the variable describing the exercise or trajectory a variable describing a mode of the exercise, which is preferably a value of a projection of the variable describing the exercise or trajectory in at least one direction of an optional coordinate of the measuring coordinate system, more preferably in a direction of a vertical coordinate of a coordinate system,
c) Receiving from the memory unit (6) to the processor and comparison unit (5) the limit values that describing the correct mode of the exercise,
d) Comparing at the processor and comparison unit (5) whether the determined value of the variable describing the mode of the exercise is within the received limit values, whereby the mode of the exercise is correct, or whether the determined value of the variable describing the mode of the exercise is outside the received limit values, whereby the mode of the exercise is incorrect, and
e) Transmitting, depending on the result of the comparison, from the processor and comparison unit (5) signal to the detector of the mode of the exercise by means of which is indicated either the correct or the incorrect mode of the exercise, and
f) Providing the user with the educational or feedback signal about the exercise or the trajectory thereof.

10. Method according to claim 8 or 9, **characterized in** transmitting a teaching or feedback signal in real time to the detector for the correct mode of exercising, depending on the result of the comparison, outputting a different feedback or teaching signal by the detector for the correct mode of exercising, and updating or uploading new limit values into the memory unit (6) on learning and/or teaching.

11. Method according to any one of the preceding claims 8 - 10, **characterized in** using the limit values which are variable or updatable limit values, which represent more specifically and/or converge each other on learning the correct exercise or correct trajectory on learning.

12. Method according to any one of the preceding claims 8 - 11, **characterized in** using as said limit values limit values of another person or a target person, who is preferably a top athlete, the limit values describing the exercise or trajectories.
